(19) **Europäisches Patentamt European Patent Office Office européen des brevets**

(11) **EP 2 446 304 B1**

(12) # FASCICULE DE BREVET EUROPEEN

(45) Date de publication et mention de la délivrance du brevet:
**25.09.2013 Bulletin 2013/39**

(21) Numéro de dépôt: **10725774.3**

(22) Date de dépôt: **22.06.2010**

(51) Int Cl.:
**G01T 3/06** (2006.01)     **G01T 1/17** (2006.01)

(86) Numéro de dépôt international:
**PCT/EP2010/058830**

(87) Numéro de publication internationale:
**WO 2010/149661 (29.12.2010 Gazette 2010/52)**

(54) **PROCÉDÉ APTE A DISCRIMINER UNE COMPOSANTE GAMMA ET UNE COMPOSANTE NEUTRONIQUE DANS UN SIGNAL ELECTRONIQUE**

**VERFAHREN ZUR UNTERSCHEIDUNG EINER GAMMA-KOMPONENTE UND EINER NEUTRONENKOMPONENTE BEI EINEM ELEKTRONISCHEN SIGNAL**

**METHOD FOR DISCRIMINATING A GAMMA COMPONENT AND A NEUTRON COMPONENT IN AN ELECTRONIC SIGNAL**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **24.06.2009 FR 0954306**

(43) Date de publication de la demande:
**02.05.2012 Bulletin 2012/18**

(73) Titulaire: **Commissariat à l'Énergie Atomique et aux Énergies Alternatives 75015 Paris (FR)**

(72) Inventeurs:
• **CORRE, Gwenole**
  **F-91190 Saint-Aubin (FR)**
• **KONDRASOVS, Vladimir**
  **91120 Palaiseau (FR)**
• **NORMAND, Stéphane**
  **50540 Isigny Le Buat (FR)**

(74) Mandataire: **Ilgart, Jean-Christophe et al BREVALEX 95 rue d'Amsterdam 75378 Paris Cedex 8 (FR)**

(56) Documents cités:
**DE-A1- 1 564 271     JP-A- 2 074 890
US-A- 4 217 497     US-A1- 2004 262 530**

• **GUERRERO C ET AL: "Analysis of the BC501A neutron detector signals using the true pulse shape" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL LNKD- DOI: 10.1016/J.NIMA.2008.09.017, vol. 597, no. 2-3, 1 décembre 2008 (2008-12-01), pages 212-218, XP025690869 ISSN: 0168-9002 [extrait le 2008-10-06]**

**Description**

L'invention concerne un procédé apte à discriminer une composante gamma et une composante neutronique dans un signal électronique qui résulte de la détection d'un rayonnement gamma et/ou neutronique.

**ARRIERE PLAN DE L'INVENTION**

Dans le domaine nucléaire, le besoin existe de discriminer les parties de rayonnement provenant des neutrons des parties de rayonnement provenant des rayons gamma afin d'identifier là menace NR (NR pour « Nucléaire et Radiologique »), par exemple pour évaluer la gravité d'une menace ou, plus concrètement, pour évaluer une masse de matière fissile.

A ce jour, la discrimination à partir de signaux issus de scintillateurs organiques est réalisée par analyse de forme. Deux procédés connus sont utilisés qui sont basés sur un principe consistant à exploiter une différence de population des états énergétiques de molécules selon le pouvoir ionisant des particules incidentes, lequel est lié à leur masse et à leur charge.

US4217497 divulgue un procédé de détection de rayonnement gamma et/ou neutronique dans lequel le rayonnement gamma et/ou neutronique est incident sur un scintillateur qui délivre un signal lumineux qui est transmis à un photomultiplicateur, lequel photomultiplicateur effectue une conversion lumière/électrons et délivre un signal électronique qui comprend une composante gamma et/ ou une composante neutronique. Ce procédé comprend également une étape de discrimination du signal en fonction de son origine, à savoir rayonnement gamma et/ou neutronique.

Un premier procédé consiste à dupliquer un signal issu du scintillateur sur deux lignes. Le signal de la première ligne est intégré puis différencié. Le passage du signal par zéro est caractéristique d'une particule ayant interagi avec le matériau fluorescent du scintillateur. Ensuite, la distance temporelle entre le début dudit signal et le passage par zéro est déterminée. Sur la seconde ligne, le début du signal est déterminé par un discriminateur à fraction constante. Le temps ainsi déterminé est directement lié à la particule qui a interagi avec le scintillateur. Plus ce temps est important, plus la particule est ionisante.

Le second procédé consiste à intégrer un signal issu d'un scintillateur sur deux fenêtres temporelles différentes, la première contenant l'ensemble du signal, et la seconde uniquement la partie dite retardée, i.e. celle contenue dans la seconde partie du signal, la partie décroissante. Par analyse biparamétrique, on peut alors distinguer deux parties dans le graphique bidimensionnel affichant la charge totale versus la charge retardée, chacune correspondant à une zone d'intérêt contenant les impulsions soit d'origine neutronique, que soit d'origine gamma.

Ces deux procédés comparent deux signaux entre eux. Un inconvénient lié à une comparaison entre deux signaux est que, compte tenu de la variabilité des formes, il est très difficile de discriminer les particules entre elles dans les cas où la différence des signaux est très faible, ce qui est le cas des scintillateurs organiques solides.

**OBJET DE L'INVENTION**

L'invention a pour objet un procédé de discrimination de particules adapté pour être utilisé avec des scintillateurs organiques solides n'ayant pas les inconvénients de l'art antérieur.

**BREVE DESCRIPTION DE L'INVENTION**

Dans ce but, l'invention propose un procédé apte à discriminer une composante gamma et une composante neutronique dans un signal électronique qui résulte de la détection d'un rayonnement gamma et/ou neutronique par un système comprenant un scintillateur couplé à un photomultiplicateur, caractérisé en ce qu'il comprend les étapes suivantes mises en oeuvre par un calculateur :

- retarder d'un temps TAU et atténuer d'un coefficient ALPHA le signal électronique pour obtenir un signal retardé et atténué,
- soustraire le signal retardé et atténué du signal électronique pour obtenir un signal de différence qui comprend une composante gamma de différence et/ou une composante neutronique de différence, et
- calculer une grandeur sigma2 telle que :

$$\text{sigma2} = \int_{\delta}^{T2} S_3(t)\,dt$$

où $\delta$ est un instant de passage par zéro de la composante gamma de différence et T2 est un instant préalablement déterminé ultérieur à l'instant $\delta$ choisi de façon que, dans un intervalle [$\delta_{ref}$, T2], la grandeur sigma2 soit négative pour une composante gamma et positive pour une composante neutronique.

**BREVE DESCRIPTION DES FIGURES**

D'autres caractéristiques et avantages de l'invention apparaîtront à la lumière d'un mode de réalisation préférentiel fait en référence aux figures jointes, parmi lesquelles :

- La Figure 1 représente un schéma de principe de système de détection de l'invention ;
- La figure 2 représente un schéma détaillé d'un circuit qui appartient au système représenté en figure 1 ;
- Les figures 3a-3d et 4a-4d représentent différents signaux gamma et neutroniques aptes à décrire différentes étapes du procédé de discrimination de l'invention ;

- La figure 5 représente, à titre d'exemple, l'affichage d'un résultat obtenu par le procédé de discrimination de l'invention.

Sur toutes les figures les mêmes références désignent les mêmes éléments.

## EXPOSE DETAILLE DU MODE DE REALISATION PREFERENTIEL DE L'INVENTION

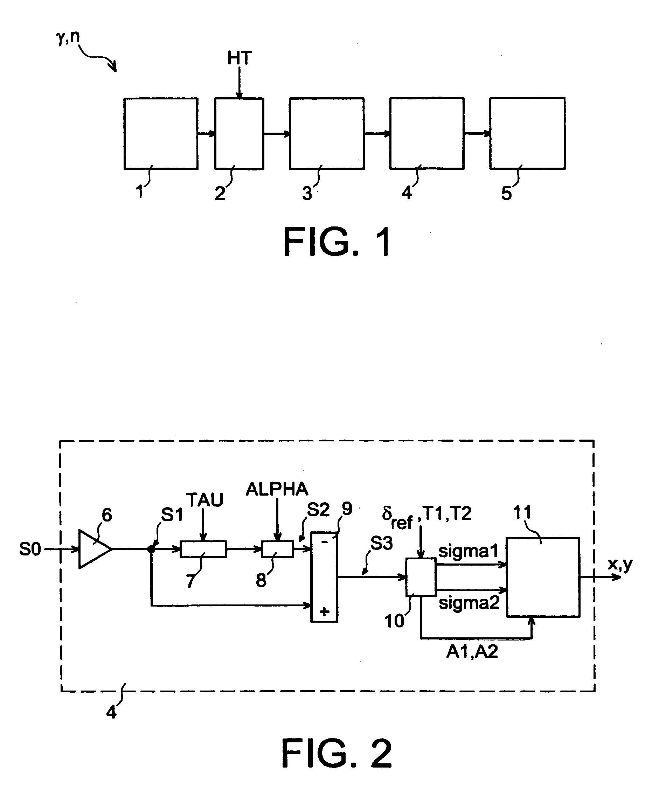

La Figure 1 représente un schéma de principe d'un système de détection de l'invention.

Le système comprend un détecteur 1, par exemple un scintillateur organique solide, adapté pour recevoir des rayonnements gamma et/ou des rayonnements neutroniques. La sortie du détecteur 1 est reliée à l'entrée d'un photomultiplicateur 2 polarisé par une haute tension HT. Le photomultiplicateur 2 a une sortie reliée à l'entrée d'un convertisseur analogique/numérique 3 (par exemple un convertisseur 1GHz, 8 bits), dont la sortie est reliée à l'entrée d'un calculateur 4. Le calculateur 4 est décrit en détail en référence à la figure 2. La sortie du calculateur 4 est reliée à un dispositif d'affichage 5 qui affiche le résultat des calculs effectués par le calculateur.

Selon le mode de réalisation représenté en figure 1, le système de détection comprend un convertisseur analogique/numérique 3. Il faut cependant noter que l'invention concerne également le cas où le système de détection ne comprend pas de convertisseur analogique/numérique. Le traitement des signaux est alors un traitement analogique.

En fonctionnement, des rayonnements gamma et/ou neutroniques interagissent avec le scintillateur organique solide 1, lequel délivre un signal lumineux qui est transmis au photomultiplicateur 2. Le photomultiplicateur 2 effectue une conversion lumière/électrons et délivre un signal électronique qui est transmis au convertisseur analogique/numérique 3 qui convertit les signaux analogiques en signaux numériques. Les signaux numériques sont ensuite envoyés au calculateur 4. Le résultat du calculateur 4 est ensuite affiché sur le dispositif d'affichage 5.

La Figure 2 représente une vue détaillée du calculateur 4. Le circuit d'entrée du calculateur 4 comprend préférentiellement un préamplificateur 6. Ce préamplificateur peut toutefois être supprimé dès lors que le système de détection comprend un photomultiplicateur 2 de performances suffisantes pour induire un signal exploitable. La sortie du préamplificateur 6 est reliée, d'une part, à l'entrée d'un dispositif de retard 7 et, d'autre part, à une première entrée d'un opérateur de différence 9. La sortie du dispositif de retard est reliée à l'entrée d'un dispositif d'atténuation 8 dont la sortie est reliée à une seconde entrée de l'opérateur de différence 9. La sortie de l'opérateur de différence 9 est reliée à l'entrée d'un opérateur d'extraction 10 dont une première sortie est reliée à une première entrée d'un dispositif d'acquisition 11 et une seconde sortie est reliée à une seconde entrée du dispositif d'acquisition 11. La sortie du dispositif d'acquisition 11 est reliée à l'entrée du dispositif d'affichage 5.

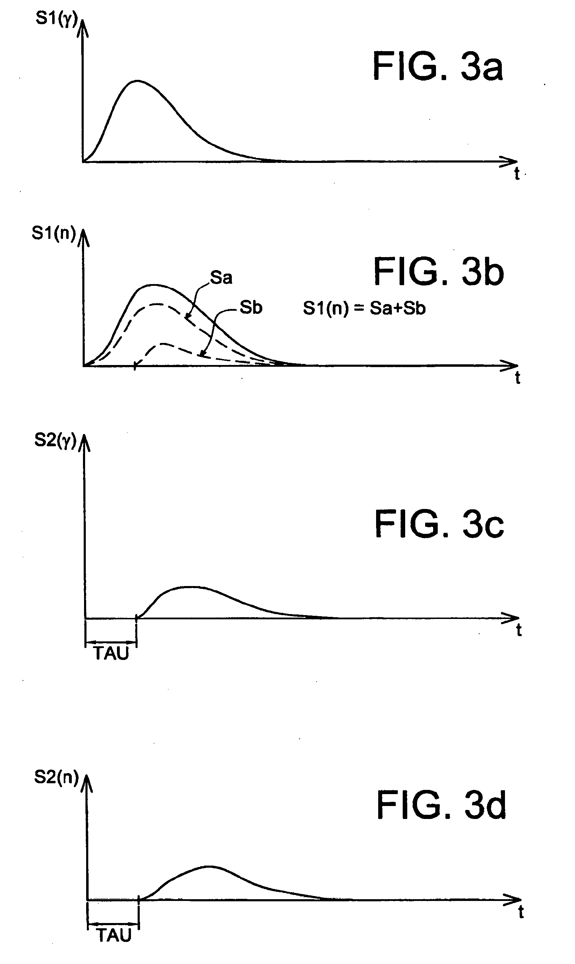

En fonctionnement, un signal S0 est fourni en entrée du préamplificateur 6. Le préamplificateur 6 amplifie le signal S0 et délivre un signal S1. Le signal S1 comprend une composante gamma et/ou une composante neutronique, la composante neutronique se décomposant elle-même en deux composantes qui se superposent, à savoir une composante rapide due à une désexcitation prompte dans le matériau du scintillateur et une composante retardée due à une désexcitation retardée dans le matériau du scintillateur. Les figures 3a et 3b représentent, respectivement, une composante gamma S1(γ) et une composante neutronique S1(n) du signal S1 dans le cas de signaux analogiques. La composante neutronique S1(n) comprend la composante neutronique rapide Sa et la composante neutronique retardée Sb.

Le signal S1 qui est délivré par le préamplificateur 6 est alors transmis directement sur la première entrée de l'opérateur différence 9 et, via le dispositif de retard 7 et le dispositif d'atténuation 8, sur la deuxième entrée de l'opérateur 9. Le dispositif de retard 7 retarde le signal d'un temps TAU et le dispositif d'atténuation 8 atténue le signal d'un coefficient ALPHA. Un signal S2 est délivré par le dispositif de retard 8. Les figures 3c et 3d représentent, respectivement, la composante gamma retardée et atténuée S2(γ) et la composante neutronique retardée et atténuée S2(n) du signal S2. Les valeurs TAU et ALPHA choisies sont issues d'un processus d'itération préalablement mis en oeuvre qui sera décrit ultérieurement. TAU a de préférence une valeur comprise dans l'intervalle ]0, 10ns] et ALPHA a de préférence une valeur comprise dans l'intervalle ]0, 1].

L'opérateur de différence 9 effectue ensuite la différence entre le signal S1 et le signal S2. Le signal S3 délivré en sortie de l'opérateur 9 est alors :

$$S3 = S1 - S2$$

Le signal S3 comprend une composante gamma S3(γ) et/ou une composante neutronique S3(n).

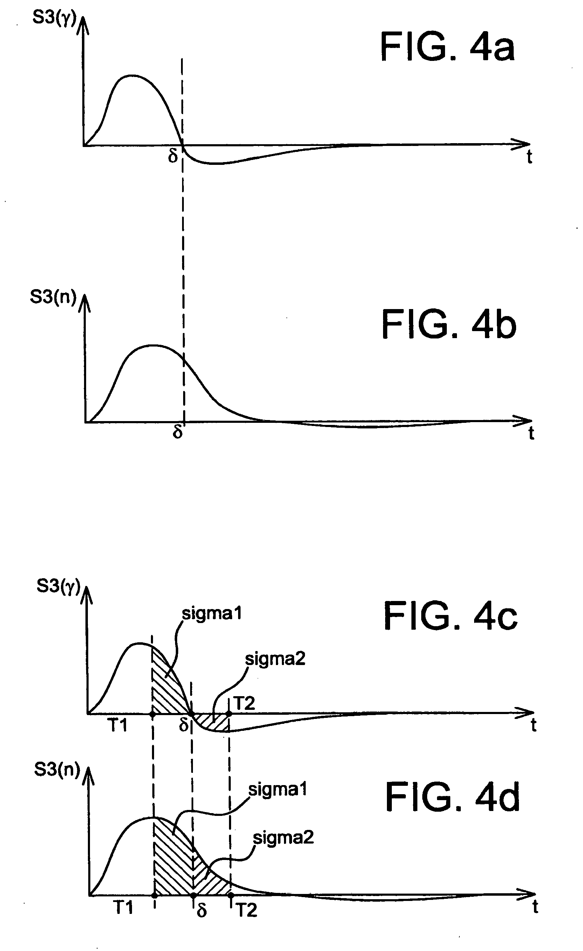

Les figures 4a et 4b représentent, respectivement, la composante gamma S3(γ) et la composante neutronique S3(n) en fonction du temps. Les signaux S3(γ) et S3(n) passent tous deux par zéro, le signal S3(γ) passant par zéro à un instant δ qui précède l'instant où le signal S3(n) passe par zéro. L'opérateur d'extraction 10 qui reçoit le signal S3 est programmé pour être utilisé à partir d'un instant T1 jusqu'à un instant T2 autour d'un instant $δ_{ref}$. L'opérateur d'extraction 10 comprend des moyens aptes à mesurer l'instant δ de passage par zéro du signal S3(γ) dans l'intervalle [T1, T2]. Les instants $\delta_{ref}$, T1 et T2 sont déterminés, comme cela sera précisé ultérieurement, lors du processus d'itération mentionné précédemment.

L'opérateur d'extraction 10 calcule des grandeurs sigma1 et sigma2 telles que :

$$\mathtt{sigma1} = \int_{T1}^{\delta} S_3(t)\,dt$$

$$\mathtt{sigma2} = \int_{\delta}^{T2} S_3(t)\,dt$$

Les figures 4c et 4d illustrent de façon symbolique les quantités sigma1 et sigma2 pour chacun des signaux S3(γ) et S3(n).

Le dispositif d'acquisition 11 reçoit en entrée les grandeurs calculées sigma1 et sigma2 et calcule les grandeurs x et y telles que :

$$\mathtt{y = sigma1/A1,}$$

et

$$\mathtt{x = sigma2/A2}$$

où A1 est l'amplitude du signal de différence choisie à un instant donné pendant la durée $\delta_{ref}$-T1, par exemple l'instant T1, et A2 l'amplitude du signal de différence choisie à un instant donné pendant la durée $T_2$-$\delta_{ref}$, par exemple l'instant T2. Les grandeurs x et y sont calculées pour chaque impulsion.

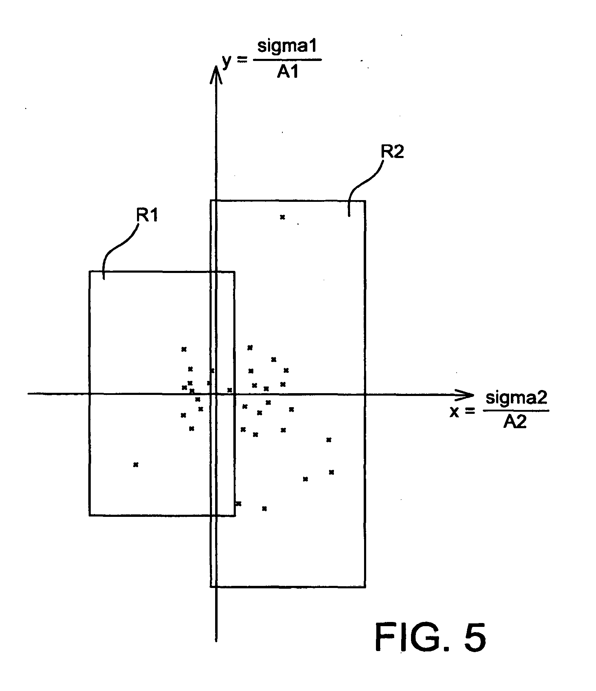

Le résultat du traitement effectué par le dispositif d'acquisition 11 est affiché par le dispositif d'affichage 5. La figure 5 illustre, à titre d'exemple, l'affichage d'un résultat.

Avantageusement, selon l'invention, le fait de corréler le signal reçu avec lui-même permet de prendre en compte toute la variabilité interne des impulsions qui constituent le signal. Il est alors possible de calculer une grandeur (sigma2) apte à discriminer un signal gamma d'un signal neutronique. La grandeur sigma2 est en effet négative pour un signal gamma et positive pour un signal neutronique. En affichant sur un même diagramme le couple de valeurs (x, y) pour chaque incidence d'un rayonnement reçu, les valeurs représentant un rayonnement gamma peuvent alors être séparées des valeurs représentant un rayonnement neutronique, les valeurs représentant un rayonnement gamma étant sur la partie gauche du diagramme et les valeurs représentant un rayonnement neutronique étant sur la partie droite. De ce fait, une zone R1 située principalement du côté des x négatifs rassemble l'ensemble des incidences des rayonnements gamma et une zone R2 située principalement du côté des x positifs rassemble l'ensemble des incidences des rayonnements neutroniques (voir figure 5). Les zones R1 et R2 peuvent toutefois se recouvrir partiellement du fait du phénomène connu de diaphonie.

Compte tenu de la nature des rayonnements discriminés, le procédé de l'invention ne peut conduire à l'établissement de résultats fiables qu'après intégration d'un grand nombre d'impulsions. En effet, bien qu'une analyse soit effectuée impulsion par impulsion, un résultat pertinent ne peut être considéré que d'un point de vue global, lorsqu'une analyse en nombre a été conduite. Typiquement il faut une analyse comprise entre 100 et 1000 impulsions unitaires (gamma et/ou neutrons) pour avoir un résultat pertinent permettant l'analyse de la nature de la source de rayonnement observée.

Le processus d'itération effectué pour déterminer les paramètres TAU, ALPHA, $\delta_{ref}$, T1 et T2 va maintenant être décrit.

Tout d'abord, un premier signal gamma de référence est envoyé en entrée du système de détection de l'invention pour lequel des valeurs de TAU et de ALPHA arbitraires sont choisies comme paramètres de réglage initiaux respectifs du dispositif de retard 7 et du dispositif d'atténuation 8. Les valeurs choisies de TAU et de ALPHA sont, par exemple, respectivement égales à 5ns et 0,5.

Un signal S3(γ) est alors prélevé en sortie de l'opérateur 9 et les valeurs de TAU et de ALPHA sont modifiées jusqu'à ce que la courbe du signal S3(γ) en fonction du temps ait une forme sensiblement identique à celle représentée en figure 4c, c'est-à-dire jusqu'à ce que le signal S3(γ) passe par zéro à un instant $\delta_{ref}$ et présente une partie positive et une partie négative clairement distinctes de part et d'autre de l'instant $\delta_{ref}$.

Sur la base de la courbe S3(γ) ainsi optimisée, les instants T2 et T1 sont alors choisis. L'instant T2 est un instant ultérieur à l'instant $\delta_{ref}$, choisi, par exemple, comme l'instant situé au-delà de 15% de l'instant où la partie négative du signal S3(γ) a son maximum en valeur absolue (valeur négative minimale). L'instant T1 est un instant antérieur à l'instant $\delta_{ref}$ choisi, par exemple, comme l'instant situé au-delà de 15% de l'instant où la partie positive du signal S3(γ) a son maximum. Des signaux $x_{ref\gamma}$ et $y_{ref\gamma}$ correspondant aux valeurs choisies pour les paramètres TAU, ALPHA, $\delta_{ref}$, T1 et T2 sont alors délivrés par le dispositif d'acquisition 11.

D'autres signaux gamma de référence sont ensuite envoyés en entrée du système de détection de l'invention, par exemple dix séries de mille signaux successifs. Les paramètres TAU, ALPHA, $\delta_{ref}$, T1 et T2 sont alors optimisés afin de rassembler au mieux les couples $x_{ref\gamma}$ et $y_{ref\gamma}$ qui sont délivrés par les différents signaux de référence.

Une fois les paramètres TAU, ALPHA, $\delta_{ref}$, T1

et T2 ainsi optimisés, des signaux de référence contenant des rayons gamma et des neutrons sont à leur tour envoyés en entrée du système de détection, par exemple dix séries de mille signaux successifs. Une nouvelle optimisation de l'ensemble des paramètres TAU, ALPHA, $\delta_{ref}$, T1 et T2 est alors effectuée de façon à, cette fois, séparer au mieux les couples $x_{ref\gamma}$ et $y_{ref\gamma}$ obtenus à partir des rayons gamma des couples $x_{refn}$ et $y_{refn}$ obtenus à partir des neutrons.

Dès lors qu'il est considéré que les couples $x_{ref\gamma}$ et $y_{ref\gamma}$ obtenus à partir des rayons gamma sont globalement bien séparés des couples $x_{refn}$ et $y_{refn}$ obtenus à partir des neutrons, les valeurs de TAU, ALPHA, $\delta_{ref}$, T1 et T2 sont choisies pour être les valeurs utilisées pour la mise en oeuvre du procédé de discrimination de l'invention.

**Revendications**

1. Procédé apte à discriminer une composante gamma ($S1(\gamma)$) et une composante neutronique ($S1(n)$) dans un signal électronique ($S1$) qui résulte de la détection d'un rayonnement gamma et/ou neutronique par un système comprenant un scintillateur couplé à un photomultiplicateur, **caractérisé en ce qu'**il comprend les étapes suivantes mises en oeuvre par un calculateur :

   - retarder (7) d'un temps TAU et atténuer (8) d'un coefficient ALPHA le signal électronique ($S1$) pour obtenir un signal retardé et atténué ($S2$),
   - soustraire (9) le signal retardé et atténué ($S2$) du signal électronique ($S1$) pour obtenir un signal de différence ($S3$) qui comprend une composante gamma de différence ($S3(\gamma)$) et/ou une composante neutronique de différence ($S3(n)$), et
   - calculer (10) une grandeur sigma2 telle que :

$$\text{sigma2} = \int_{\delta}^{T2} S_3(t)\,dt$$

   où $\delta$ est un instant de passage par zéro de la composante gamma de différence ($S3(\gamma)$) et T2 est un instant préalablement déterminé ultérieur à l'instant $\delta$ choisi de façon que, dans un intervalle [$\delta_{ref}$, T2], la grandeur sigma2 soit négative pour une composante gamma et positive pour une composante neutronique.

2. Procédé selon la revendication 1, dans lequel les valeurs de TAU, ALPHA, $\delta_{ref}$ et T2 sont déterminées, par itération, à l'aide d'une succession de signaux électroniques de référence, de sorte que l'instant $\delta_{ref}$ représente un instant pour lequel une composante gamma quelconque de l'ensemble des signaux électroniques de référence passe sensiblement par zéro et que l'instant T2 soit tel que la quantité sigma1 soit négative pour une composante gamma quelconque de l'ensemble des signaux électroniques de référence et positive pour une composante neutronique quelconque de l'ensemble des signaux électroniques de référence.

3. Procédé selon l'une quelconque des revendications 1 ou 2, dans lequel TAU a une valeur comprise dans l'intervalle ]0, 10ns] et ALPHA une valeur comprise dans l'intervalle ]0, 1].

4. Procédé selon l'une quelconque des revendications 1 à 3, dans lequel est calculée une grandeur supplémentaire sigma1 telle que :

$$\text{sigma1} = \int_{T1}^{\delta} S_3(t)\,dt$$

   l'instant T1 étant un instant préalablement déterminé antérieur à l'instant $\delta$ choisi de façon que, dans un intervalle [T1, $\delta_{ref}$], la grandeur sigma1 soit positive pour une composante gamma et pour une composante neutronique.

5. Procédé selon la revendication 4, dans lequel les grandeurs sigma1 et sigma2 sont transmises à un dispositif d'affichage (5).

6. Système apte à discriminer une composante gamma ($S1(\gamma)$ et une composante neutronique ($S1(n)$) dans un signal électronique qui résulte de la détection d'un rayonnement gamma et/ou neutronique par un système comprenant un scintillateur couplé à un photomultiplicateur, **caractérisé en ce qu'**il comprend :

   - un dispositif de retard (7) et un dispositif d'atténuation (8) pour; respectivement, retarder d'un temps TAU et atténuer d'un coefficient ALPHA le signal électronique ($S1$) afin d'obtenir un signal retardé et atténué ($S2$),
   - un opérateur de différence (9) pour soustraire le signal retardé et atténué ($S2$) du signal électronique ($S1$) afin d'obtenir un signal de différence ($S3$) qui comprend une composante gamma de différence ($S3(\gamma)$) et/ou une composante neutronique de différence ($S3(n)$), et
   - une unité de calcul (10) pour calculer une grandeur sigma2 telle que :

$$sigma2 = \int_{\delta}^{T2} S_3(t)\,dt$$

où $\delta$ est un instant de passage par zéro de la composante gamma de différence (S3($\gamma$)) et T2 est un instant préalablement déterminé ultérieur à l'instant $\delta$ choisi de façon que, dans un intervalle [$\delta_{ref}$, T2], la grandeur sigma2 soit négative pour une composante gamma et positive pour une composante neutronique.

7. Système selon la revendication 6, qui comprend des moyens pour calculer une grandeur supplémentaire sigma1 telle que :

$$sigma1 = \int_{T1}^{\delta} S_3(t)\,dt$$

l'instant T1 étant un instant préalablement déterminé antérieur à l'instant $\delta$ choisi de façon que, dans un intervalle [T1, $\delta_{ref}$], la grandeur sigma2 soit positive pour une composante gamma et pour une composante neutronique.

8. Système selon la revendication 7, qui comprend un dispositif d'affichage auquel les grandeurs sigma1 et sigma2 sont transmises.

**Patentansprüche**

1. Verfahren, welches dazu geeignet ist, eine Gamma-Komponente (S1($\gamma$)) und eine Neutronen-Komponente (S1(n)) in einem elektronischen Signal (S1) zu unterscheiden, welches aus der Erfassung einer Gammastrahlung oder/und Neutronenstrahlung durch ein System resultiert, welches einen Szintillator umfasst, der mit einem Photoelektronenvervielfacher gekoppelt ist, **dadurch gekennzeichnet, dass** es die folgenden Schritte umfasst, die durch eine Berechnungseinrichtung umgesetzt werden:

- Verzögern (7) des elektronischen Signals (S1) um eine Zeit TAU und Dämpfen (8) des elektronischen Signals um einen Koeffizienten ALPHA, um ein verzögertes und gedämpftes Signal (S2) zu erhalten,
- Subtrahieren (9) des verzögerten und gedämpften Signals (S2) von dem elektronischen Signal (S1), um ein Differenzsignal (S3) zu erhalten, welches eine Gamma-Differenz-Komponente (S3($\gamma$)) oder/und eine Neutronen-Differenz-Komponente (S3(n)) umfasst, und

- Berechnen (10) einer Größe sigma2, so dass:

$$sigma2 = \int_{\delta}^{T2} S_3(t)\,dt$$

wobei $\delta$ ein Zeitpunkt eines Nulldurchgangs der Gamma-Differenz-Komponente (S3($\gamma$)) ist, und wobei T2 ein zuvor bestimmter Zeitpunkt nach dem Zeitpunkt $\delta$ ist, der so ausgewählt ist, dass in einem Intervall [$\delta_{ref}$, T2] die Größe sigma2 für eine Gamma-Komponente negativ und für eine Neutronen-Komponente positiv ist.

2. Verfahren nach Anspruch 1, wobei die Werte von TAU, ALPHA, $\delta_{ref}$ und T2 mit Hilfe einer Folge von elektronischen Referenzensignalen iterativ bestimmt werden, so dass der Zeitpunkt $\delta_{ref}$ einen Zeitpunkt repräsentiert, für den eine beliebige Gamma-Komponente aus der Menge von elektronischen Referenzensignalen im Wesentlichen durch Null geht, und so dass der Zeitpunkt T2 derart beschaffen ist, dass die Größe sigma1 für eine beliebige Gamma-Komponente aus der Menge von elektronischen Referenzsignalen negativ ist, und für eine beliebige Neutronen-Komponente aus der Menge von elektronischen Referenzsignalen positiv ist.

3. Verfahren nach einem der Ansprüche 1 oder 2, wobei TAU einen Wert hat, der im Intervall ]0, 10ns] liegt, und ALPHA einen Wert hat, der im Intervall ]0, 1] liegt.

4. Verfahren nach einem der Ansprüche 1 bis 3, wobei eine zusätzliche Größe sigma1 berechnet wird, so dass:

$$sigma1 = \int_{T1}^{\delta} S_3(t)\,dt$$

wobei der Zeitpunkt T1 ein zuvor bestimmter Zeitpunkt vor dem Zeitpunkt $\delta$ ist, der so ausgewählt ist, dass in einem Intervall [T1, $\delta_{ref}$] die Größe sigma1 für eine Gamma-Komponente und für eine Neutronen-Komponente positiv ist.

5. Verfahren nach Anspruch 4, wobei die Größen sigma1 und sigma2 zu einer Anzeigeeinrichtung (5) übertragen werden.

6. System, welches dazu geeignet ist, eine Gamma-Komponente (S1($\gamma$)) und eine Neutronen-Komponente (S1(n)) in einem elektronischen Signal zu unterscheiden, welches aus der Erfassung von einer Gamma-strahlung oder/und Neutronenstrahlung durch ein System resultiert, welches einen Szintillator umfasst, der mit einem Photoelektronenvervielfacher gekoppelt ist,
**dadurch gekennzeichnet, dass** es umfasst:

- eine Verzögerungseinrichtung (7) und eine Dämpfungseinrichtung (8) um das elektronische Signal (S1) um eine Zeit TAU zu verzögern bzw. um einen Koeffizienten ALPHA zu dämpfen, um ein verzögertes und gedämpftes Signal (S2) zu erhalten,
- einen Differenzoperator (9), um das verzögerte und gedämpfte Signal (S2) von dem elektronischen Signal (S1) zu subtrahieren, um ein Differenzsignal (S3) zu erhalten, welches eine Gamma-Differenz-Komponente (S3($\gamma$)) oder/und eine Neutronen-Differenz-Komponente (S3(n)) umfasst, und
- eine Berechnungseinheit (10) um eine Größe sigma2 zu berechnen, so dass

$$sigma2 = \int_{\delta}^{T2} S_3(t)\,dt$$

wobei $\delta$ ein Zeitpunkt eines Nulldurchgangs der Gamma-Differenz-Komponente (S3($\gamma$)) ist, und wobei T2 ein zuvor bestimmter Zeitpunkt nach dem Zeitpunkt $\delta$ ist, der so ausgewählt ist, dass in einem Intervall [$\delta_{ref}$, T2] die Größe sigma2 für eine Gamma-Komponente negativ und für eine Neutronen-Komponente positiv ist.

7. System nach Anspruch 6, welches Mittel umfasst, um eine zusätzliche Größe sigma1 zu berechnen, so dass:

$$sigma1 = \int_{T1}^{\delta} S_3(t)\,dt$$

wobei der Zeitpunkt T1 ein zuvor bestimmter Zeitpunkt vor dem Zeitpunkt $\delta$ ist, der so ausgewählt ist, dass in einem Intervall [T1, $\delta_{ref}$] die Größe sigma1 für eine Gamma-Komponente und für eine Neutronen-Komponente positiv ist.

8. System nach Anspruch 7, welches eine Anzeigeeinrichtung umfasst, zu welcher die Größen sigma1 und sigma2 übertragen werden.

**Claims**

1. A method capable of discriminating between a gamma component (S1($\gamma$)) and a neutron component (S1(n)) in an electronic signal (S1) resulting from the detection of gamma and/or neutron radiation, by means of a system comprising a scintillator coupled with a photomultiplier, **characterized in that** it comprises the following steps performed by a computer:

- delaying (7) by a time TAU and attenuating (8) by a coefficient ALPHA the electronic signal (S1) to obtain a delayed and attenuated signal (S2),
- subtracting (9) the delayed and attenuated signal (S2) from the electronic signal (S1) to obtain a difference signal (S3) which comprises a gamma difference component (S3($\gamma$)) and/or a neutron difference component (S3(n)), and
- computing (10) a magnitude sigma2 such that:

$$sigma2 = \int_{\delta}^{T2} S_3(t)\,dt$$

where $\delta$ is an instant when the gamma difference component (S3($\gamma$)) passes zero and T2 is a previously determined instant that is later than instant $\delta$ chosen so that, within an interval [$\delta_{ref}$, T2], the magnitude sigma2 is negative for a gamma component and positive for a neutron component.

2. The method according to claim 1, wherein the values of TAU, ALPHA, $\delta_{ref}$ and T2 are determined by iteration, using a succession of reference electronic signals, so that instant $\delta_{ref}$ represents an instant at which any gamma component of all the reference electronic signals substantially passes zero and so that instant T2 is such that the quantity sigma1 is negative for any gamma component of all the reference electronic signals and positive for any neutron component of all the reference electronic signals.

3. The method according to either of claims 1 or 2, wherein TAU has a value within the interval ]0, 10ns] and ALPHA a value within the interval ]0, 1].

4. The method according to any of claims 1 to 3, wherein an additional magnitude sigma1 is calculated such that:

$$sigma1 = \int_{T1}^{\delta} S_3(t)\,dt$$

instant T1 being a previously determined instant prior to instant 5 chosen so that, in an interval [T1, $\delta_{ref}$], the magnitude sigma1 is positive for a gamma component and for a neutron component.

**5.** The method according to claim 4, wherein the magnitudes sigma1 and sigma2 are transmitted to a display device (5).

**6.** A system capable of discriminating between a gamma component (S1($\gamma$)) and a neutron component (S1(n)) in an electronic signal resulting from the detection of gamma and/or neutron radiation, by means of a system comprising a scintillator coupled with a photomultiplier, **characterized in that** it comprises:

- a delaying device (7) and an attenuating device (8) respectively to delay, by a time TAU, and attenuate, by a coefficient ALPHA, the electronic signal (S1) in order to obtain a delayed and attenuated signal (S2),
- a difference operator (9) to subtract the delayed and attenuated signal (S2) from the electronic signal (S1) in order to obtain a difference signal (S3) which comprises a gamma difference component (S3($\gamma$)) and/or a neutron difference component (S3(n)), and
- a computing unit (10) to calculate a magnitude sigma2 such that:

$$\mathrm{sigma2} = \int_{\delta}^{T2} S_3(t)\,dt$$

where $\delta$ is an instant of zero cross-over by the gamma difference component (S3($\gamma$)) and T2 is a previously determined instant that is later than instant $\delta$ chosen so that, in an interval [$\delta_{ref}$, T2], the magnitude sigma2 is negative for a gamma component and positive for a neutron component.

**7.** The system according to claim 6, which comprises means for computing an additional magnitude sigma1 such that:

$$\mathrm{sigma1} = \int_{T1}^{\delta} S_3(t)\,dt$$

instant T1 being a previously determined instant prior to instant $\delta$ chosen so that, in an interval [T1, $\delta_{ref}$], the magnitude sigma1 is positive for a gamma component and for a neutron component.

**8.** The system according to claim 7, which comprises a display device to which the magnitudes sigma1 and sigma 2 are transmitted.

γ,n

HT

## FIG. 1

## FIG. 2

FIG. 3a

FIG. 3b

$S1(n) = Sa+Sb$

FIG. 3c

FIG. 3d

FIG. 4a

FIG. 4b

FIG. 4c

FIG. 4d

FIG. 5

**EP 2 446 304 B1**

## RÉFÉRENCES CITÉES DANS LA DESCRIPTION

**Documents brevets cités dans la description**

- US 4217497 A